# EUROPEAN PATENT APPLICATION

(11) **EP 4 733 544 A1**
(43) Date of publication of application: **29.04.2026**
(21) Application number: 24208897.9
(22) Date of filing: 25.10.2024
(51) Int. Cl.: E21C 35/24, B60W 60/00, G05D 1/00

(54) **CONTROLLING MOVEMENT OF MINING MACHINE UPON LOST CONNECTION**

(71) Applicant: Sandvik Mining and Construction Oy, 33330 Tampere (FI)
(72) Inventor: SUOMI, Petri, 33311 Tampere (FI); SAHLMAN, Mika, 33311 Tampere (FI)
(74) Representative: Sandvik

(57) **Abstract**

A method comprises: detecting the mining machine to have lost connection to an external safety system; controlling the mining machine to stop movement of at least a movable carrier of the mining machine while maintaining a motor of the mining machine in operation, in response to detecting the mining machine to have lost the connection to the external safety system; determining not to cause the motor of the mining machine to enter a non-operational state, in response to detecting the mining machine to have re-established the connection to the external safety system within a first predetermined time period; and causing the motor of the mining machine to enter the non-operational state, in response to detecting the mining machine not to have re-established the connection to the external safety system within the first predetermined time period.

## Description

### TECHNICAL FIELD

Various example embodiments generally relate to the field of controlling mining machines. Some example embodiments relate to controlling movement of a carrier of a mining machine when detecting the mining machine to have lost connection to an external safety server.

### BACKGROUND

In various fields of technology, such as for example mining and rock drilling, it may be desired to automate operations of vehicles. However, when enabling large mining machines to operate autonomously, it may be desired to ensure that the mining machines operate safely, for example within a restricted area of a mine.

### SUMMARY

The invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: detect the mining machine to have lost connection to an external safety system; control the mining machine to stop movement of at least a movable carrier of the mining machine while maintaining a motor of the mining machine in operation, in response to detecting the mining machine to have lost the connection to the external safety system; determine not to cause the motor of the mining machine to enter a non-operational state, in response to detecting the mining machine to have re-established the connection to the external safety system within a first predetermined time period; and cause the motor of the mining machine to enter the non-operational state, in response to detecting the mining machine not to have re-established the connection to the external safety system within the first predetermined time period.

According to a second aspect, a mining machine is disclosed. The mining machine may be configured to: detect the mining machine to have lost connection to an external safety system; control the mining machine to stop movement of at least a movable carrier of the mining machine while maintaining a motor of the mining machine in operation, in response to detecting the mining machine to have lost the connection to the external safety system; determine not to cause the motor of the mining machine to enter a non-operational state, in response to detecting the mining machine to have re-established the connection to the external safety system within a first predetermined time period; and cause the motor of the mining machine to enter the non-operational state, in response to detecting the mining machine not to have re-established the connection to the external safety system within the first predetermined time period.

According to a third aspect, a method for controlling a mining machine is disclosed. The method may comprise: detecting the mining machine to have lost connection to an external safety system; controlling the mining machine to stop movement of at least a movable carrier of the mining machine while maintaining a motor of the mining machine in operation, in response to detecting the mining machine to have lost the connection to the external safety system; determining not to cause the motor of the mining machine to enter a non-operational state, in response to detecting the mining machine to have re-established the connection to the external safety system within a first predetermined time period; and causing the motor of the mining machine to enter the non-operational state, in response to detecting the mining machine not to have re-established the connection to the external safety system within the first predetermined time period.

According to a fourth aspect, an apparatus is disclosed. The apparatus may comprise: means for detecting the mining machine to have lost connection to an external safety system; means for controlling the mining machine to stop movement of at least a movable carrier of the mining machine while maintaining a motor of the mining machine in operation, in response to detecting the mining machine to have lost the connection to the external safety system; means for determining not to cause the motor of the mining machine to enter a non-operational state, in response to detecting the mining machine to have re-established the connection to the external safety system within a first predetermined time period; and means for causing the motor of the mining machine to enter the non-operational state, in response to detecting the mining machine not to have re-established the connection to the external safety system within the first predetermined time period.

According to a fifth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: detect the mining machine to have lost connection to an external safety system; control the mining machine to stop movement of at least a movable carrier of the mining machine while maintaining a motor of the mining machine in operation, in response to detecting the mining machine to have lost the connection to the external safety system; determine not to cause the motor of the mining machine to enter a non-operational state, in response to detecting the mining machine to have re-established the connection to the external safety system within a first predetermined time period; and cause the motor of the mining machine to enter the non-operational state, in response to detecting the mining machine not to have re-established the connection to the external safety system within the first predetermined time period.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a track-mounted drill rig;
FIG. 2 illustrates an example of an underground drill rig;
FIG. 3 illustrates an example of a mining machine communicatively coupled to a remote control device;
FIG. 4 illustrates an example of a controller communicatively coupled to an external safety server;
FIG. 5 illustrates an example of a controller communicatively coupled to a remote station safety programmable logic controller (PLC) via a field cabinet safety digital input-output (DIO) device;
FIG. 6 illustrates an example of controllers comprising safety PLCs being communicatively coupled to an external safety system;
FIG. 7 illustrates an example of controllers comprising safety PLCs being communicatively coupled to a remote station safety PLCs via a field cabinet safety DIO device;
FIG. 8 illustrates an example of a flow chart for controlling a mining machine;
FIG. 9 illustrates an example of an apparatus configured to practise one or more example embodiments; and
FIG. 10 illustrates an example of a method for controlling a mining machine.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

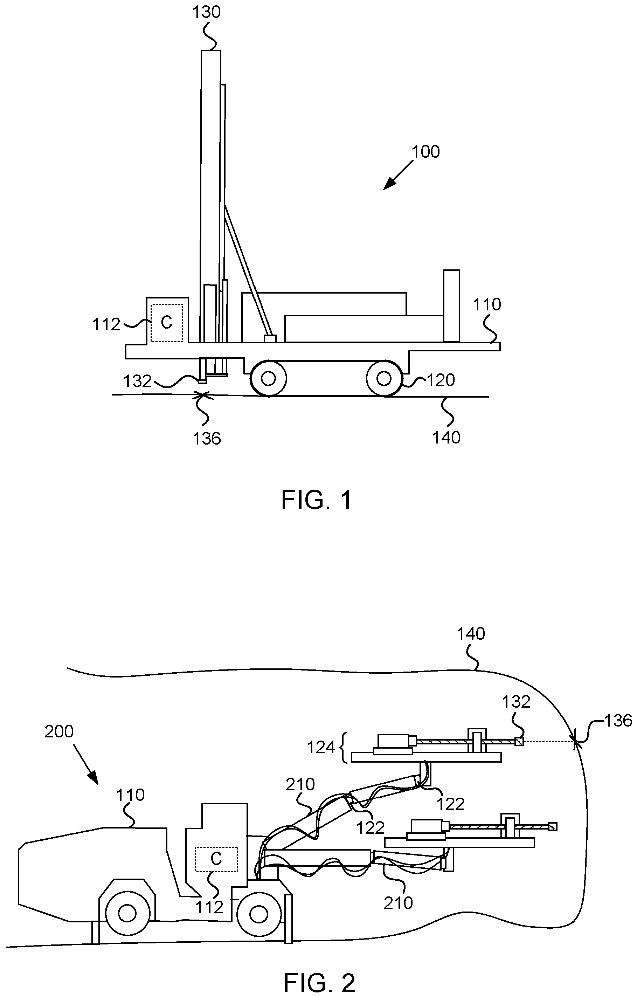

FIG. 1 illustrates an example of a track-mounted drill rig. Even though track-mounted drill rig 100 is illustrated as a rotary blasthole drill rig, example embodiments of the present disclosure may be also applied to other type of mining machines, mining vehicles, or mining equipment, such as for example any other type of surface drill rigs, underground drill rigs (cf., FIG.2), mining trucks, mining loaders, or multitaskers.

Track-mounted drill rig 100 may be an automated mining machine. An automated mining machine may be equipped with tools configured for certain task(s), for example drilling. An automated mining machine operating in an automatic mode may be configured to, for example, receive a task to be performed, perceive the environment of the automated mining machine and autonomously perform the task while taking the environment into account. An automated mining machine operating in an automatic mode may be configured to operate independently but may be taken under external control by a human operator at certain operation areas or conditions, such as during states of emergencies. Example embodiments of the present disclosure may be however applied also in non-autonomous or semi-autonomous mining machines, for example remote-controlled mining machines, as well as other type of non-autonomous or semi-autonomous mining machines.

Track-mounted drill rig 100 may comprise movable carrier 110. Track-mounted drill rig may further comprise mast 130. Track-mounted drill rig 100 may comprise controller 112 (e.g., a machine control system), which may be configured to control various operations of track-mounted drill rig 100, for example tramming or drilling. As another example, the orientation of mast 130 may be controlled by controller 112, for example to place mast 130 in a suitable orientation for drilling or for moving track-mounted drill rig 100 to another location, e.g., towards a next hole position. Controller 112 may be configured to control the inclination angle of mast 130.

Track-mounted drill rig 100 may comprise tracks 120, which may be connected to movable carrier 110. Movable carrier 110 may comprise equipment for moving or stabilising movable track-mounted drill rig 100, such as for example a motor or stabilizer jacks. The motor may be an electric motor or a combustion engine, such as for example a diesel engine, or the like. Alternatively, track-mounted drill rig 100 may be battery-operated, e.g., configured to obtain power for movable carrier 110 as direct current (DC) from one or more batteries of track-mounted drill rig 100. Even though two tracks 120 have been illustrated in FIG. 1, track-mounted drill rig 100 may in general comprise a plurality (e.g., two, four,...) of tracks 120. Track-mounted drill rig 100 may comprise one or more of the parts described above, or other component(s), tool(s), or equipment relevant for a track-mounted drill rig.

Track-mounted drill rig 100 may comprise a drilling unit, which may be coupled to mast 130. The drilling unit may comprise equipment for drilling holes in drilling surface 140. The drilling unit may for example comprise a drill rod and a feed beam configured to enable drill bit 132 to be applied to drilling surface 140 in order to drill a hole.

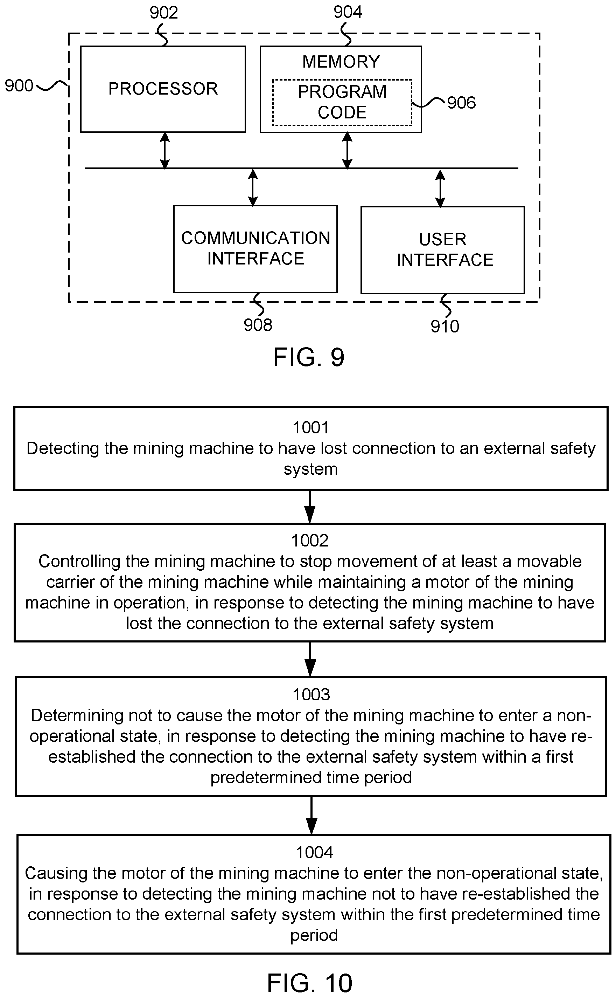

Track-mounted drill rig 100 may be configured to operate according to a drilling plan. The drilling plan may be configured to indicate planned hole position(s) 136 for drilling hole(s) to drilling surface 140. A planned hole position may comprise a start position of a hole planned to be drilled on drilling surface 140. The drilling plan may comprise a digital drilling plan. Track-mounted drill rig 100 may be preconfigured with the drilling plan. The drilling plan may be for example stored in a memory of track-mounted drill rig 100 or controller 112, such as the at least one memory 904 of FIG. 9. Controller 112 may be configured to obtain the drilling plan by retrieving it from the memory. Alternatively, controller 112 may be configured to obtain the drilling plan by receiving it from a remote device, e.g., a server, or via a user interface.

Controller 112 may be provided as a software application residing on a memory and being executable by a processor. An example of an apparatus suitable for implementing controller 112 is provided in FIG. 9. Controller 112 may comprise, or be communicatively coupled to, various functions, blocks, or applications for implementing functionality of controller 112. For example, controller 112 may comprise or be communicatively coupled to a data management server, which may be configured to store information on functions to be performed by track-mounted drill rig 100, the drilling plan, tunnel lines, point cloud or mesh presentations of tunnel lines or profiles, a mine map point cloud, or the like; or in general representation(s) of the working environment of track-mounted drill rig 100.

Controller 112 may comprise a navigation application configured to control, or enable a human operator to control, navigation of track-mounted drill rig 100, for example to move track-mounted drill rig 100 to reach a next planned hole position.

Track-mounted drill rig 100 may comprise a positioning system comprising positioning device(s), for example a Global Positioning System (GPS) receiver(s), Global Navigation Satellite System (GNSS), other satellite positioning device(s), and/or a non-satellite positioning device(s). The positioning device(s) may be configured to determine a current navigation position of track-mounted drill rig 100. For example, a positioning device may be coupled to a particular part of track-mounted drill rig 100 and thereby configured to determine the position of that part of track-mounted drill rig 100 as the navigation position. Alternatively, controller 112 may be configured to determine the navigation position based on data received from multiple positioning devices of track-mounted drill rig 100, for example as the centre point of the positions detected by the positioning devices.

FIG. 2 illustrates another example of a mining machine. In this example, mining machine is represented by underground drill rig 200 comprising movable carrier 110 and boom(s) 210 connected thereto. Underground drill rig 200 may further comprise components similar to track-mounted drill rig 100 of FIG. 1, for example, equipment for moving or stabilising underground drill rig 200. For example, movable carrier 110 may comprise equipment for moving or stabilising underground drill rig 200, such as for example a motor, wheels, or stabilizer jacks (e.g., ground support). Movable carrier 110 may be configured to move autonomously or it may be configured to be controlled by a human operator, either remotely or locally at underground drill rig 200. Even though two booms 210 have been illustrated in FIG. 2, underground drill rig 200 may generally comprise one or a plurality (e.g., two, three, four,...) of booms 210. Boom(s) 210 may comprise a plurality of boom parts coupled to each other, movable carrier 110, and/or drilling unit 124 by joint(s) 122. Controllable joints 122 enable drilling unit 124 to be placed at a desired position and orientation with respect to drilling surface 140. Underground drill rig 200 may comprise one or more of the parts described above, or other tool(s) or equipment relevant for an underground drill rig. As already described with reference to FIG. 1, also underground drill rig 200 may comprise controller (C) 112.

In the example of FIG. 2, underground drill rig 200 comprises two drilling units. Drilling unit 124 may comprise a feeding system configured to keep drill bit 132 of drilling unit 124 in contact with the drilling face, in this example drilling surface 140, and to enable a drill rod to move along a feed beam during drilling. In general, drilling unit 124 may be movable relative to underground drill rig 200, e.g., movable relative to movable carrier 110. This provides the benefit of enabling holes to be drilled at different positions of drilling surface 140 without moving movable carrier 110.

Drilling unit 124 may be configured to drill holes at drilling surface 140, for example at planned hole position(s) 136. The planned hole position(s) 136 may be defined in a drilling plan, which may be preconfigured at underground drill rig 200 or delivered to underground drill rig 200 over a communication interface. Drilling surface 140 may comprise the roof, floor, or wall(s) of the tunnel, or any portion(s) thereof. It is however noted that drilling surface 140 may comprise any rock surface to be drilled. For example, drilling surface 140 might be located outside any tunnel.

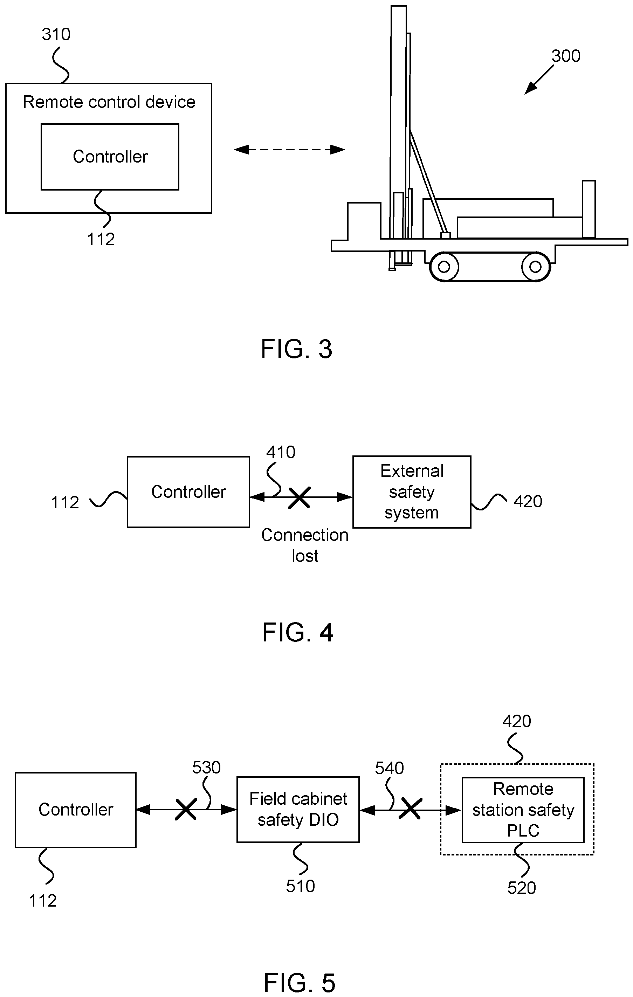

FIG 3. illustrates an example of a mining machine communicatively coupled to a remote control device. Controller 112 may be alternatively located external to mining machine 300 and configured to remotely control mining machine 300. Mining machine 300 may be for example track-mounted drill rig 100, underground drill rig 200 or any other mining machine, mining vehicle, or mining equipment. Controller 112 may be provided at remote control device 310, which may be external to mining machine 300, as illustrated in FIG. 3. Remote control device 310 may comprise a server or other computing device located remote from mining machine 300, for example at a remote operator station. Functionality of controller 112 may be provided at mining machine 300, remote control device 310, or distributed between mining machine 300 and remote control device 310. Information may be exchanged between controller 112 and mining machine 300 over a data communication interface including any suitable wireless or wired connection. Examples of suitable communication interfaces are described with reference to FIG. 9.

FIG. 4 illustrates an example of a controller communicatively coupled to an external safety system. Controller 112 may be communicatively coupled to external safety system 420, which may be external to mining machine 300. External safety system 420 may be for example provided at a server located remote from mining machine 300, for example outside a mine or tunnel, or in general outside an operating area of mining machine 300. Information may be exchanged between external safety system 420 and mining machine 300 over a communication interface, for example comprising any suitable wireless connection 410. Wireless connection 410 may be a direct radio connection between controller 112 and external safety system 420, or comprise an indirect radio and/or wired connection via an intermediate device, such as a field cabinet safety digital input/output (DIO), as illustrated in FIG. 5. Examples of suitable communication interfaces are described with reference to FIG. 9. External safety system 420 may be located for example in a control room or van, which might be outside the operational area of mining machine 300. Operational area of mining machine 300 may comprise an area at which mining machine 300 is configured (e.g., permitted) to move autonomously in order to perform a task, such as drilling.

External safety system 420 may be configured to monitor operations of mining machine 300, such as its position, and/or objects (e.g., people) in the environment of mining machine 300. External safety system 420 may be configured to send control instructions to controller 112, for example in order to control operations of mining machine 300, e.g., movement of movable carrier 110 or tool(s) of mining machine, for example upon detection of a safety hazard, such as for example a person entering the operational area of mining machine 300. In order to enable external safety system 420 to properly control mining machine 300 via controller 112, the connection between controller 112 and external safety system 420 should be sufficiently reliable.

Wireless connection 410 may be however prone to errors and sometimes controller 112 may lose connection to external safety system 420, as indicated by the cross over wireless connection 410, thereby causing controller 112 to trigger local safety measures for mining machine 300. For example, a communication break of a particular duration (e.g., 2 s) might have an effect similar to pressing an emergency stop button located at mining machine 300 or a fast stop button located at external safety system 420 or a field cabinet safety DIO device (cf., FIG. 5). For example, a communication break might be configured to cause the motor of mining machine 300 to stop immediately. Stopping the motor immediately might however cause damage to components of the motor or extend the time needed to restart the motor. For example, in case of diesel engines shutting the engine down immediately might break expensive turbo chargers and therefore cause an interruption in operation of mining machine 300. In case of electrified mining machines (e.g., drill rigs) it might take as long as 1 to 5 hours for a warm engine to recover from the immediate shut-down. For example, otherwise it might not be possible to restart the motor because of temperature differences between different parts of the motor. In case of electric motor solutions switching the motor off immediately might break contactors on mining machine 300. Example embodiments of the present disclosure enable to avoid such damages by stopping movement of movable carrier without turning the motor completely off if the connection is re-established soon enough, or controllably turning the motor of in case the connection is not re-established.

FIG. 5 illustrates an example of a controller communicatively coupled to a remote station safety programmable logic controller (PLC) via a field cabinet safety DIO device. In this example, external safety system 420 comprises remote safety PLC 520. The wireless connection to controller 112 may be routed via field cabinet safety DIO device 510. Wireless connection 530 between controller 112 and field cabinet safety DIO device 510 may be for example a wireless local area network (WLAN) connection (e.g., Wi-Fi), a mesh network connection, or a cellular mobile network connection such as a 4G long-term evolution (LTE) or 5G connection, as defined by the 3^{rd} Generation Partnership Project (3GPP). Connection 540 between field cabinet safety DIO device 510 and external safety system 420 may be for example a fiber network connection or a local Ethernet network. The connection between controller 112 and external safety system 420 may therefore comprise one or more radio links and one or more wired network connections. Losing connection at one of such communication links may cause controller 112 to lose connection to external safety system 420.

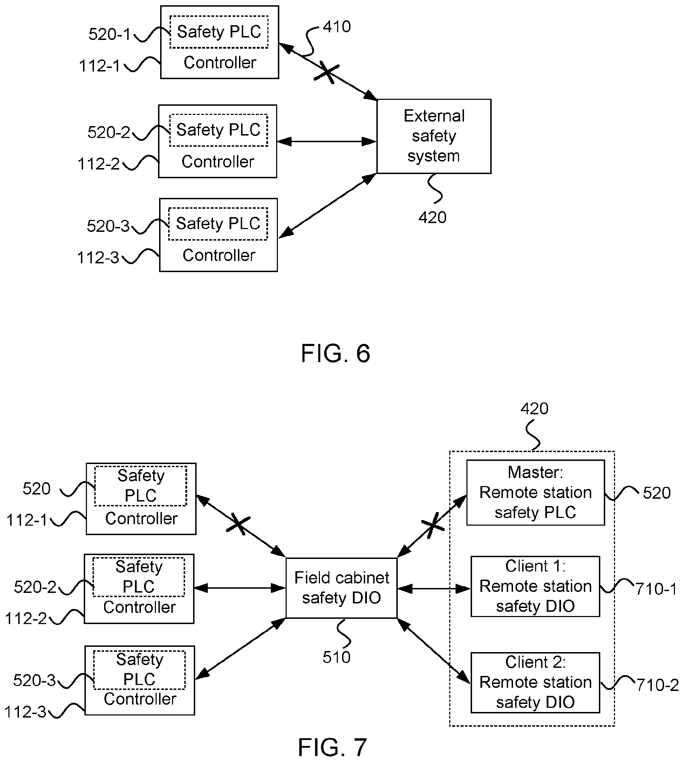

FIG. 6 illustrates an example of controllers comprising safety PLCs being communicatively coupled to an external safety system. External safety system 420 may be configured to monitor multiple mining machines 300, the mining machines being configured to be controlled by respective instances 112-1, 112-2, 112-3 of controller 112. In one example, controller(s) 112-1, 112-2, 112-3 may comprise respective instance(s) 520-1, 520-2, 520-3 of safety PLC 520.

FIG. 7 illustrates an example of controllers comprising safety PLCs being communicatively coupled to an external safety system via a field cabinet safety DIO device. Field cabinet safety DIO device 510 may be located in the field, e.g., in the operational area of mining machine 300, a control room, a van, or the like, or outside the operational area of mining machine 300. External safety system 420 may comprise remote station safety PLC 520 as a master device of external safety system 420. Remote station safety PLC 520 may be configured to control one or more client devices of external safety system 420, such as remote station safety DIO(s) 710-1, 710-2. A master device or a client device of external safety system 420 may be configured to control a mining machine and be therefore communicatively coupled to a respective controller 112-1, 112-2, 112-3, or a safety PLC thereof. With regard to FIG. 6 and 7, losing communication at particular radio links of wired connections, may cause particular controller 112-1, 112-2, 112-3 to lose connection to external safety system 420.

As illustrated in FIGs. 4 to 7, example embodiments of the present disclosure may be implemented in association with various types of configurations of external safety system 420. Example embodiments of the present disclosure enable mining machine 300 to stay partially operational regardless of a communication break between controller 112 and external safety system 420. For example, losing communication between mining machine 300 (e.g., located at a drill area) and external safety system 420 (e.g., located at a control room) for a predetermined time period such as 2 s may be configured to cause activation of a movement stop and setting the motor of mining machine 300 to idle, instead of immediately switching the motor off. Controller 112, e.g., communications output of safety PLC 520 or any other system configured for this kind of functionality, may be configured to set a cooling sequence or any other preparatory action(s) active on an engine control module (ECM) during the communication break, for example via a machine control system computer. Safety PLC 520 may be also configured to activate a movement stop relay, e.g., in parallel with the cooling sequence, to cause movable carrier 110 to become substantially stationary. The cooling sequence may have a configurable duration, for example set to N seconds in control system side. Controller 112 may be configured to cancel the cooling sequence, if the connection to external safety system 420 is re-established during the cooling sequence. The motor of mining machine 300 may be therefore kept in operation (e.g., running or in active state) and unnecessary shut-down of the motor may be avoided. If the connection to external safety system 420 is not re-established, the motor (e.g., diesel engine or electric motor) may be shut down appropriately, e.g., after completing the cooling sequence. Control system of mining machine 300 may have diagnostics capability to acknowledge if any fault, e.g., mining machine 300 moving after receiving instructions to stop movement, exists and possibility to cause emergency stop of mining machine 300.

Example embodiments of the present disclosure therefore enable to avoid unnecessary repair costs, for example due to damage caused to the turbo or the motor in general. Furthermore, example embodiments may be implemented without affecting functionality of safety system electrics in mining machines. In case of electrified mining machines, long delays before restarting the motor may be avoided and operational time of battery-operated mining machines may be extended. Significant reduction of non-operational time of mining machine may be achieved.

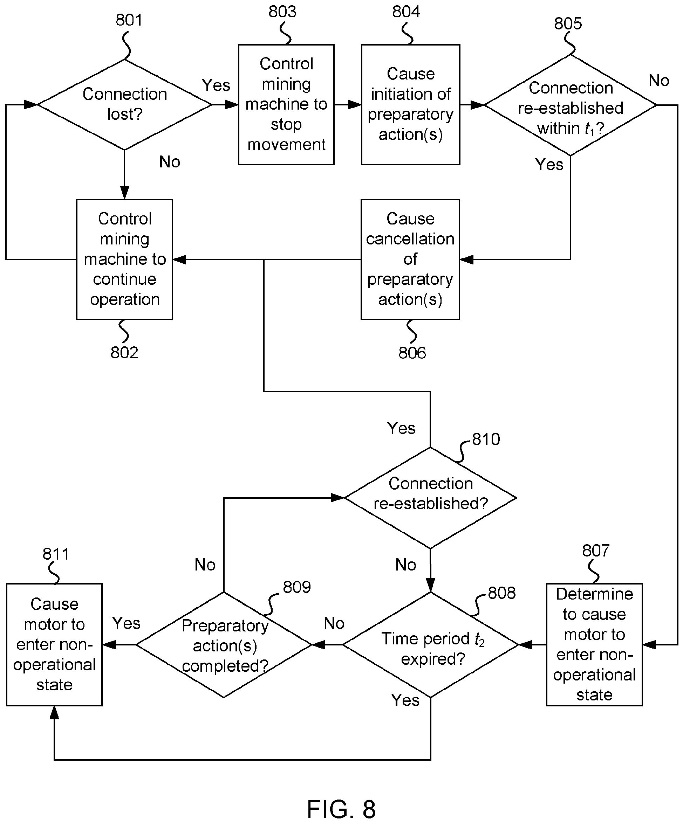

FIG. 8 illustrates an example of a flow chart for controlling a mining machine. Operations of the flow chart may be configured to be performed by controller 112 or any suitable apparatus located within or outside mining machine 300. Even though described by using a single motor as an example, it is understood that mining machine 300 may comprise one or a plurality (e.g., two, three, four,...) of motors and each motor may be configured to be controlled as described herein. A motor may comprise for example a combustion engine or an electric motor. A motor may also be battery powered.

At operation 801, controller 112 may be configured to detect whether mining machine 300 has lost connection to external safety system 420. Controller 112 may be for example configured to detect whether mining machine 300 receives signals or messages from external safety system 420, e.g., acknowledgements to messages transmitted to external safety system 420. Controller 112 may be configured to detect whether mining machine 300 has or has not received communication(s) (e.g., message(s), signal(s), or acknowledgement(s)) from external safety system 420, for example during a predetermined time period *t*_{connection_break}, which may be also referred to as a third predetermined time period. Controller 112 may be configured to detect that mining machine 300 has lost connection to external safety system 420, for example in response to detecting that mining machine 300 (e.g., controller 112) has not received communications (e.g., any communication) from external safety system 420, for example for time period *t*_{connection_break}. Duration of the time period *t*_{connection_break} may be, for example, 1 to 5 seconds. A predetermined time period may comprise a duration indicated by a parameter stored at controller 112, for example the at least one memory 904, or otherwise accessible by controller 112. Time period *t*_{connection_break} may comprise a time period ending at the present time (e.g., current moment of time).

At operation 802, controller 112 may be configured to control mining machine 300 to continue operation. This may be in response to determining that mining machine 300 is connected to external safety system, in other words in response to determining that mining machine 300 has not lost connection to external safety system 420. Continuing the operation of mining machine 300 may comprise continuing movement of movable carrier 110 or performance of a task by mining machine 300, e.g., a mining task such as drilling or loading. Continuing operation of mining machine 300 may comprise maintaining motor(s) of mining machine 300 working, e.g., in an active state where the motor(s) is configured or enabled to produce a force for moving movable carrier 110, or component(s) or tool(s) of mining machine 300 such as mast 130, drilling unit 124, or boom(s) 210.

At operation 803, controller 112 may be configured to control mining machine 300 to stop movement of movable carrier 110, and optionally one or more components or tools of mining machine 300. Controller 112 may be configured to stop movement of at least movable carrier 110 of mining machine 300, in response to determining that mining machine 300 has lost connection to external safety system 420. Controller 112 may be configured to stop movement of whole mining machine 300 or parts of mining machine 300, such as boom(s), wheel(s), or drilling unit(s).

Additionally, controller 112 may be configured to control the motor of mining machine 300 to maintain in operation. Maintaining the motor of mining machine 300 in operation may comprise setting the motor to idle. In idle the motor may be configured to run (e.g., slowly) while being disconnected from a load or out of gear. In idle the motor of mining machine 300 may be configured not to produce a force for moving movable carrier 110, or component(s) or tool(s) of mining machine 300.

Controller 112 may be therefore configured to determine not to cause the motor of mining machine 300 to enter a non-operational state, even if detecting mining machine 300 to have lost the connection to external safety system 420. A non-operational state of the motor may be a state, where the motor is not running (e.g., not even idling) or where the motor is otherwise disabled such that it is not ready for producing power, for example to cause movement of movable carrier 110 or component(s) or tool(s) of mining machine 300. For example, motor that is in the non-operational state may need to be ignited or otherwise turned on, in order to take it in operation.

At operation 804, controller 112 may be configured cause initiation of preparatory action(s). This may be in response to detecting mining machine 300 to have lost connection to external safety system 420 (cf., operation 801). The preparatory action(s) may be configured for entry of the motor of mining machine 300 into the non-operational state. The preparatory action(s) may include operations configured to be performed in order to safely, or otherwise beneficially, transition the motor of mining machine 300 into the non-operational state. The preparatory action(s) may comprise a cooling sequence of mining machine 300, in particular a motor thereof. A cooling sequence may comprise set of operations configured to dissipate heat and/or to balance temperature differences in the motor of mining machine 300. A cooling sequence may comprise, for example, setting revolutions of the motor to idle speed, initiating or boosting air-cooling of the motor, removing oil from a compressor of the motor, and/or cooling electric circuitry of the motor, for example to a predetermined temperature. If mining machine 300 is battery-powered, the preparatory action(s) may comprise reducing (e.g., driving to zero) voltage and/or current of an intermediate circuit. The intermediate circuit may comprise a middle voltage circuit configured to be coupled to a high-voltage battery of mining machine 300. Middle voltage may comprise a voltage between control voltage level such as 24 V and voltage level of the high-voltage battery of mining machine 300 (e.g., 480 - 700 V). The high-voltage battery may be configured to provide power for moving mining machine 300. The intermediate circuit may be configured to be disconnected from the high-voltage battery during shut-down of the motor of mining machine 300. Reducing the current and/or voltage of the intermediate circuit provides the benefit of avoiding breaking of contactors configured to connect the intermediate circuit to the high-voltage battery when shutting down the motor.

At operation 805, controller 112 may be configured to determine whether the connection between mining machine 300 and external safety system 420 has been re-established. Controller 112 may be configured to monitor whether the connection is re-established during a predetermined time period *t*₁ (e.g., *t*₁ ≥ 20 s), which may be also referred to as a first predetermined time period. Time period *t*₁ may be longer than time period *t*_{connection_break}. Time period *t*₁ may comprise a time period starting from detecting, by controller 112, mining machine 300 to have lost the connection to external safety system 420. Controller 112 may be configured to cause initiation of the preparatory action(s) (cf., operation 804) during time period *t*₁. This provides the benefit of speeding up safe transition of the motor into the non-operational state, in case the connection to external safety system 420 is not re-established.

Re-establishing connection to external safety system 420 may comprise establishing any suitable connection to external safety system 420. For example, mining machine 300 may re-establish the same connection, e.g., same Wi-Fi link that was lost at operation 801. Alternatively, mining machine 300 may re-establish the connection to external safety system 420 using a different communication link, e.g., using a different Wi-Fi link or using another technology such as a cellular radio connection.

Even though operations 801, 802, 803, 804 and 805 have been illustrated in FIG. 8 to be in a particular order, it is noted that these and any other operations may be performed in any suitable sequential order, and/or in parallel, where appropriate. For example, operations 803 and 804 could be performed in reverse order. Alternatively, controller 112 might be configured to initiate the preparatory action(s) after time period *t*₁ has ended without re-establishment of the connection to external safety system 420. It is noted that the use of time period *t*₁ is optional.

At operation 806, controller 112 may be configured to cause cancellation of the preparatory action(s). This may be in response to determining that the connection between mining machine 300 and external safety system 420 has been re-established, for example within time period *t*₁. Controller 112 may be configured to determine that the connection between mining machine 300 and external safety system 420 has been re-established, in response to detecting mining machine 300 to again receive communication(s) from external safety system 420. Controller 112 may be configured to move to operation 802 and cause mining machine 300 to continue in the operational mode, in response to determining that preparatory action(s) have been cancelled. Controller 112 may be configured to control the motor of mining machine 300 to be maintained in operation. In other words, controller 112 may be configured to determine not to cause the motor to enter the non-operational state, in response to detecting mining machine 300 to have re-established the connection to external safety system 420, for example within time period *t*₁.

At operation 807, controller 112 may be configured to determine to cause the motor of mining machine 300 to enter the non-operational state. Controller 112 may be configured to cause mining machine 300 to enter the non-operational state in response to determining that the connection between mining machine 300 and external safety system 420 has not been re-established, for example within time period *t*₁. Controller 112 may be configured to move to execution of operation 811 directly from operation 807 to immediately cause the motor of mining machine 300 to enter the non-operational state. Alternatively, controller 112 may be configured to determine whether to wait for completion of the preparatory action(s) before causing the motor of mining machine 300 to enter the non-operational state. This may be based on monitoring whether a predetermined time period *t*₂, which may be also referred to as a second predetermined time period, has expired, as will be further described with reference to operations 808 to 811.

At operation 808 controller 112 may be configured to monitor whether time period *t*₂ has expired. Time period *t*₂ may comprise a time period starting from detecting, by controller 112, mining machine 300 to have lost the connection to external safety system 420. Time period *t*₂ may be longer than time period *t*₁ (e.g., *t*₂ ≥ 120 s). Controller 112 may be configured to move to execution of operation 811 to cause the motor of mining machine 300 to enter the non-operational state before completion of the preparatory action(s), in response to determining that time period *t*₂ has expired. This provides the benefit of enabling to ensure that the motor of mining machine 300 is caused to enter the non-operational state after a particular time regardless of whether the preparatory action(s) have been completed, which improves safety of the system.

Before causing the motor of mining machine 300 to enter the non-operational state, controller 112 may be configured to cause cancellation of the preparatory action(s). This provides the benefit of ensuring that no damage is caused to the motor due to ongoing preparatory action(s) when shutting down the motor. Alternatively, controller 112 may be configured to cause the motor to enter the non-operational state without cancellation of the preparatory actions. This provides the benefit of speeding up shut-down of the motor.

Controller 112 may be configured to move to execution of operation 809 to monitor progress of the preparatory action(s), in response to determining that time period *t*₂ has not expired.

At operation 809, controller 112 may be configured to determine whether the preparatory action(s) have been completed. Controller 112 may be configured to determine that the preparatory action(s) have been completed, for example based on received sensor data indicative of completion of the preparatory action(s), e.g., temperature of the motor being below a threshold, oil level of the compressor being below a threshold, voltage level and/or current level of the intermediate circuit being below a threshold, or the like.

Controller 112 may be configured to move to execution of operation 811 to cause the motor of mining machine 300 to enter the non-operational state, further in response to completion of the preparatory action(s). Completion of the preparatory action(s) may be another condition for causing the motor of mining machine 300 to enter the non-operational state, for example in addition to the connection not being re-established within time period *t*₁. Controller 112 may be therefore configured to move to execution of operation 811 to cause the motor of mining machine 300 to enter the non-operational state, in response to both 1) detecting mining machine 300 not to have re-established the connection to the external safety system within the first predetermined time period and 2) completion of the preparatory action(s). Controller 112 may be configured to move to execution of operation 811, in response to detecting both of these conditions to be met. Completion of the preparatory action(s) may be after expiry of time period *t*₁. If the connection is re-established within time period *t*₁, controller 112 may be configured to cause cancellation of the preparatory actions, thereby ensuring that the motor of mining machine 300 is not shut down before expiry of time period *t*₁. This provides the benefit of avoiding unnecessary shut-down of the motor of mining machine, as described above.

Controller 112 may be configured to move to execution of operation 810 to monitor whether mining machine 300 has re-established connection to external safety system 420. This may be in response to determining that preparatory action(s) are still ongoing, in other words that the preparatory action(s) (e.g., all preparatory actions initiated at operation 804) have not been completed.

At operation 810, controller 112 may be configured to determine whether mining machine 300 has re-established connection to external safety system 420. Considering operation 808, controller 112 may be configured to monitor whether the connection is re-established within time period *t*₂. Controller 112 may be configured to move to execution of operation 802 to control mining machine 300, in particular the motor thereof, to continue in the operational mode. In other words, controller 112 may be configured to determine not to cause the motor of mining machine 300 to enter the non-operational state, in response to determining that mining machine 300 has re-established the connection to external safety system 420 within time period *t*₂. This provides the benefit of avoiding unnecessary shut-down of the motor, in case the connection is re-established during the preparatory action(s).

Controller 112 may be configured to move back to execution of operation 808, in response to determining that mining machine 300 has not re-established connection to external safety system 420. Controller 112 may be configured to iterate operations 808 to 810 in order to monitor expiry of time period *t*₂, progress of the preparatory action(s), and/or re-establishment of connection to external safety system, in order to determine whether and when to cause the motor of mining machine 300 to enter the non-operational state. It is however noted that operations 808 to 810 may be performed in any suitable order or at least partially in parallel.

At 811, controller 112 may be configured to cause the motor of mining machine 300 to enter the non-operational state. The entry of the motor of mining machine 300 into the non-operational state may comprise, for example, stopping movement of mining machine 300, cutting off electrical power supply of the motor, shutting down ignition of the motor, setting revolutions of the motor to zero, cutting off fuel supply of the motor, and/or shutting down auxiliary systems of mining machine 300.

Alternatively, or additionally, controller 112 may be configured to with emergency stop functionality such that the motor of mining machine 300 may be caused to immediately shut down upon reception of an emergency stop command, either locally at mining machine 300 (e.g., caused by pressing an emergency stop button of mining machine 300) or from external safety system 420. For example, controller 112 may be configured to cause the motor of mining machine 300 to enter the non-operational state without initiation the preparatory action(s), in response to receiving the emergency stop command (e.g., a remote emergency stop command) from external safety system 420. A remote emergency stop command may be also referred to as a fast stop command. Controller 112 may be configured to receive the (remote) emergency stop command from external safety system 420 when mining machine 300 is connected to external safety system 420, e.g., when iterating operations 801 and 802 via the 'No' branch of operation 801.

Controller 112 may be configured to cause the motor of the mining machine to enter the non-operational state without completion, or even without initiation, of the preparatory action(s), in response to receiving the emergency stop command (e.g., a local emergency stop command). A local emergency stop command may be also referred to as an E-stop command. Controller 112 may be configured to receive the (local) emergency stop command from external safety system 420 at any time, regardless of whether mining machine 300 is connected to external safety system 420, for example during any of operations 801 to 811. The emergency stop functionality provides the benefit of enabling human intervention to the automatic shut-down process described herein, which further improves safety of the system.

It is further noted that the use of time period *t*₁ and/or *t*₂ may be optional. Controller 112 might be alternatively configured to either cause the motor of mining machine 300 to enter the non-operational state after completion of the preparatory action(s) (cf., operations 809, 811) or to control mining machine 300 to continue operation (cf. operation 802) if the connection is re-established before completion of the preparatory action(s) (cf., operation 810). Controller 112 may be therefore configured to operate without considering the expiry of time period *t*₁ and/or time period *t*₂ (cf., operations 805, 808). This provides the benefit of increasing the probability that the motor is not caused to enter the non-operational state. On the other hand, use of the time period(s) enables to guarantee that the motor is caused to enter the non-operational state after a defined time.

In general, operations of FIG.8 enable to control state of the motor of mining machine 300 based on whether mining machine 300 is connected to external safety system 420 and/or based on duration of an ongoing communication break. Mining machine 300 may comprise an emergency stop circuit, which may be configured to cause the motor of mining machine 300 to enter the non-operational state without initiation of the preparatory action(s) or without completion of the preparatory action(s). For example, if mining machine 300 is connected to external safety system 420, controller 112 may be configured to trigger the emergency stop circuit immediately in response to receiving the remote emergency stop command, in order to cause the motor of mining machine 300 to enter the non-operational state.

If mining machine 300 is not connected to external safety system 420, controller 112 may be configured to turn the motor off in a controlled manner, for example by initiating the preparatory action(s). Mining machine 300 may for example comprise a movement stop safety relay configured to cause at least movable carrier 110 to stop movement without triggering the emergency stop circuit. Controller 112 may be configured to trigger the movement stop relay, in response to detecting mining machine 300 to have lost connection to external safety system 420. This enables to cause mining machine 300 to stop movement while keeping the motor of mining machine 300 running. The movement stop safety relay may be configured to mechanically isolate power from outputs of IO (input-output) modules of mining machine 300. The movement stop safety relay may be for example configured to be controlled via an output of safety PLC 520.

If mining machine 300 is not connected to external safety system 420 and controller 112, controller 112 may be configured to trigger the emergency stop circuit after time period *t*₂, in order to cause the motor of mining machine 300 to enter the non-operational state. Triggering the emergency stop circuit immediately may comprise triggering the emergency circuit without initiating, or waiting for completion of, the preparatory action(s).

Any of the predetermined time periods (e.g., *t*_{connection_break}, *t*₁, *t*₂) may be configurable. Controller 112 may be configured to receive an indication of the predetermined time periods, e.g., via communication interface 908, for example from external safety system 420, or local user input at mining machine 300. The predetermined time periods may be for example configured to be adjustable via machine control system software. Example embodiments of the present disclosure enable mining machine 300 to follow ECM requirements for shutting down electric motors.

FIG. 9 illustrates an example of an apparatus configured to practise one or more example embodiments. Apparatus 900 may be or comprise a mining machine control apparatus, such as for example a server communicatively coupled to mining machine 300, a control apparatus located at mining machine 300, controller 112, mining machine 300 itself, or in general any device or system configured to implement the functionality described herein. Although apparatus 900 is illustrated as a single device, it is appreciated that, wherever applicable, functions of apparatus 900 may be distributed to a plurality of devices.

Apparatus 900 may comprise at least one processor 902. The at least one processor 902 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), programmable logic controller (PLC), a hardware accelerator, a special-purpose computer chip, or the like.

Apparatus 900 may further comprise at least one memory 904. The at least one memory 904 may be configured to store, for example, computer program code or the like, for example operating system software and application software. The at least one memory 904 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 904 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 904 may be also embodied separate from apparatus 900, for example as a computer readable (storage) medium, examples of which include memory sticks, compact discs (CD), or the like.

When apparatus 900 is configured to implement some functionality, some component and/or components of apparatus 900, such as for example the at least one processor 902 and/or the at least one memory 904, may be configured to implement this functionality. Furthermore, when the at least one processor 902 is configured to implement some functionality, this functionality may be implemented using program code 906 comprised, for example, in the at least one memory 904.

The functionality described herein may be performed, at least in part, by one or more computer program product components such as software components. According to an example embodiment, apparatus 900 comprises a processor or processor circuitry, such as for example a microcontroller, configured by program code 906, when executed, to execute the embodiments of the operations and functionality described herein. Program code 906 is provided as an example of instructions which, when executed by the at least one processor 902, cause performance of apparatus 900.

For example, controller 112 may be at least partially implemented as program code configured to cause apparatus 900 to perform functionality of controller 112. Similarly, transmission or reception of data, e.g., data, instruction(s), signal(s), or command(s), over an internal or external communication interface of mining machine 300 may be controlled by software.

Alternatively, or in addition, the functionality described herein can be performed, at least in part, by one or more hardware logic components. For example, and without limitation, illustrative types of hardware logic components that can be used include field-programmable gate arrays (FPGA), application-specific integrated circuits (ASIC), application-specific standard products (ASSP), system-on-a-chip systems (SOC), complex programmable logic devices (CPLD), graphics processing units (GPU), neural processing units (NPU), tensor processing units (TPU), or the like. Controller 112 may comprise control circuitry, for example any of the above hardware logic components or a combination of at least one processor and least one memory, for implementing functionality described herein.

Apparatus 900 may comprise a communication interface 908 configured to enable apparatus 900 to transmit and/or receive information. Communication interface 908 may comprise an internal or external communication interface, such as for example a radio interface between mining machine 300 and controller 112 or an internal control bus within mining machine 300. Apparatus 900 may further comprise other components and/or functions such as for example user interface 910 comprising at least one input device and/or at least one output device. The input device may take various forms such as a keyboard, a touch screen, or one or more embedded control buttons, joysticks, or other type of manual controllers. The output device may for example comprise a display, a speaker, or the like. User interface 910 may be configured to enable a human operator to monitor or control various functions of mining machine 300.

Apparatus 900 may be configured to perform or cause performance of any aspect of the method(s) described herein. Further, a computer program or a computer program product may comprise instructions for causing, when executed by apparatus 900, apparatus 900 to perform any aspect of the method(s) described herein. Further, apparatus 900 may comprise means for performing any aspect of the method(s) described herein. In one example, the means comprises the at least one processor 902, the at least one memory 904 including program code 906 (instructions) configured to, when executed by the at least one processor 902, cause apparatus 900 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 902. Apparatus 900 may comprise means for transmitting or receiving information, for example one or more wired or wireless (e.g., radio) transmitters or receivers, which may be coupled or be configured to be coupled to one or more antennas, or transmitter(s) or receiver(s) of a wired communication interface.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: detect the mining machine to have lost connection to an external safety system; control the mining machine to stop movement of at least a movable carrier of the mining machine while maintaining a motor of the mining machine in operation, in response to detecting the mining machine to have lost the connection to the external safety system; determine not to cause the motor of the mining machine to enter a non-operational state, in response to detecting the mining machine to have re-established the connection to the external safety system within a first predetermined time period; and cause the motor of the mining machine to enter the non-operational state, in response to detecting the mining machine not to have re-established the connection to the external safety system within the first predetermined time period.

According to an example embodiment of the first aspect, the computer program code is further configured to, with the at least one processor, cause the apparatus to: cause initiation of at least one preparatory action for the entry of the motor of the mining machine into the non-operational state, in response to detecting the mining machine to have lost the connection to the external safety system; and cause the motor of the mining machine to enter the non-operational state, further in response to completion of the at least one preparatory action after the first predetermined time period.

According to an example embodiment of the first aspect, the computer program code is further configured to, with the at least one processor, cause the apparatus to: cause cancellation of the at least one preparatory action, in response to detecting the mining machine to have re-established the connection to the external safety system within the first predetermined time period.

According to an example embodiment of the first aspect, the computer program code is further configured to, with the at least one processor, cause the apparatus to: cause the motor of the mining machine to enter the non-operational state before the completion of the at least one preparatory action, in response to detecting expiry of a second predetermined time period, wherein the second predetermined time period is longer than the first predetermined time period.

According to an example embodiment of the first aspect, the computer program code is further configured to, with the at least one processor, cause the apparatus to: cause the motor of the mining machine to enter the non-operational state without initiation or completion of the at least one preparatory action, in response to receiving an emergency stop command.

According to an example embodiment of the first aspect, the at least one preparatory action comprises a cooling sequence of the motor of the mining machine.

According to an example embodiment of the first aspect, the cooling sequence comprises one or more of the following: setting revolutions of the motor of the mining machine to idle speed, initiating or boosting air-cooling of the motor of the mining machine, removing oil from a compressor of the motor of the mining machine, or cooling electric circuitry of the motor of the mining machine to a predetermined temperature.

According to an example embodiment of the first aspect, the motor of the mining machine comprises a combustion engine or an electric motor.

According to an example embodiment of the first aspect, the at least one preparatory action comprises reducing voltage and/or current of an intermediate circuit of a battery-powered motor.

According to an example embodiment of the first aspect, maintaining the motor of the mining machine in operation comprises setting the motor of the mining machine to idle.

According to an example embodiment of the first aspect, the computer program code is further configured to, with the at least one processor, cause the apparatus to: determine the mining machine to have lost the connection to the external safety system, in response to detecting that the mining machine has not received any communication from the external safety system for a third predetermined time period.

According to a second aspect, a mining machine is disclosed. The mining machine may comprise the apparatus according to any example embodiment of the first aspect. The mining machine may for example comprise: at least one processor; and at least one memory including computer program code, the at least one memory and the computer program code configured to, with the at least one processor, cause the mining machine at least to: detect the mining machine to have lost connection to an external safety system; control the mining machine to stop movement of at least a movable carrier of the mining machine while maintaining a motor of the mining machine in operation, in response to detecting the mining machine to have lost the connection to the external safety system; determine not to cause the motor of the mining machine to enter a non-operational state, in response to detecting the mining machine to have re-established the connection to the external safety system within a first predetermined time period; and cause the motor of the mining machine to enter the non-operational state, in response to detecting the mining machine not to have re-established the connection to the external safety system within the first predetermined time period. The computer program code may be configured to, with the at least one processor, cause the mining machine to perform any example embodiment(s) of the apparatus of the first aspect.

FIG. 10 illustrates an example of a method for controlling a mining machine, according to a third aspect of the present disclosure. The method may comprise a computer-implemented method performed by, for example, apparatus 900 such as controller 112.

At 1001, the method may comprise detecting the mining machine to have lost connection to an external safety system.

At 1002, the method may comprise controlling the mining machine to stop movement of at least a movable carrier of the mining machine while maintaining a motor of the mining machine in operation, in response to detecting the mining machine to have lost the connection to the external safety system.

At 1003, the method may comprise determining not to cause the motor of the mining machine to enter a non-operational state, in response to detecting the mining machine to have re-established the connection to the external safety system within a first predetermined time period.

At 1004, the method may comprise causing the motor of the mining machine to enter the non-operational state, in response to detecting the mining machine not to have re-established the connection to the external safety system within the first predetermined time period.

According to an example embodiment of the third aspect, the method comprises: causing initiation of at least one preparatory action for the entry of the motor of the mining machine into the non-operational state, in response to detecting the mining machine to have lost the connection to the external safety system; and causing the motor of the mining machine to enter the non-operational state, further in response to completion of the at least one preparatory action after the first predetermined time period.

According to an example embodiment of the third aspect, the method comprises: causing cancellation of the at least one preparatory action, in response to detecting the mining machine to have re-established the connection to the external safety system within the first predetermined time period.

According to an example embodiment of the third aspect the method comprises: causing the motor of the mining machine to enter the non-operational state before the completion of the at least one preparatory action, in response to detecting expiry of a second predetermined time period, wherein the second predetermined time period is longer than the first predetermined time period.

According to an example embodiment of the third aspect, the method comprises: causing the motor of the mining machine to enter the non-operational state without initiation or completion of the at least one preparatory action, in response to receiving an emergency stop command.

According to an example embodiment of the third aspect, the at least one preparatory action comprises a cooling sequence of the motor of the mining machine.

According to an example embodiment of the third aspect, the cooling sequence comprises one or more of the following: setting revolutions of the motor of the mining machine to idle speed, initiating or boosting air-cooling of the motor of the mining machine, removing oil from a compressor of the motor of the mining machine, or cooling electric circuitry of the motor of the mining machine to a predetermined temperature.

According to an example embodiment of the third aspect, the motor of the mining machine comprises a combustion engine or an electric motor.

According to an example embodiment of the third aspect, the at least one preparatory action comprises reducing voltage and/or current of an intermediate circuit of a battery-powered motor.

According to an example embodiment of the third aspect, maintaining the motor of the mining machine in operation comprises setting the motor of the mining machine to idle.

According to an example embodiment of the first aspect, the method comprises: determining the mining machine to have lost the connection to the external safety system, in response to detecting that the mining machine has not received any communication from the external safety system for a third predetermined time period.

According to an example embodiment of the third aspect, the method is performed by an apparatus external to the mining machine and configured to remotely control the mining machine.

According to an example embodiment of the third aspect, the method is performed by the mining machine.

According to a fourth aspect, an apparatus may comprise means for detecting the mining machine to have lost connection to an external safety system; means for controlling the mining machine to stop movement of at least a movable carrier of the mining machine while maintaining a motor of the mining machine in operation, in response to detecting the mining machine to have lost the connection to the external safety system; means for determining not to cause the motor of the mining machine to enter a non-operational state, in response to detecting the mining machine to have re-established the connection to the external safety system within a first predetermined time period; and means for causing the motor of the mining machine to enter the non-operational state, in response to detecting the mining machine not to have re-established the connection to the external safety system within the first predetermined time period. The apparatus may comprise means for performing any example embodiment(s) of the method of the third aspect.

According to a fifth aspect, a computer program, a computer program product, or a (non-transitory) computer-readable medium may comprise program instructions which, when executed by an apparatus, cause the apparatus at least to: detect the mining machine to have lost connection to an external safety system; control the mining machine to stop movement of at least a movable carrier of the mining machine while maintaining a motor of the mining machine in operation, in response to detecting the mining machine to have lost the connection to the external safety system; determine not to cause the motor of the mining machine to enter a non-operational state, in response to detecting the mining machine to have re-established the connection to the external safety system within a first predetermined time period; and cause the motor of the mining machine to enter the non-operational state, in response to detecting the mining machine not to have re-established the connection to the external safety system within the first predetermined time period. The computer program, the computer program product, or the (non-transitory) computer-readable medium may comprise program instructions which, when executed by an apparatus, cause the apparatus to perform any example embodiment(s) of the method of the third aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for controlling a mining machine, the apparatus comprising:
at least one processor; and
at least one memory including computer program code, the at least one memory and the computer program code configured to, with the at least one processor, cause the apparatus at least to:
detect the mining machine to have lost connection to an external safety system;
control the mining machine to stop movement of at least a movable carrier of the mining machine while maintaining a motor of the mining machine in operation, in response to detecting the mining machine to have lost the connection to the external safety system;
determine not to cause the motor of the mining machine to enter a non-operational state, in response to detecting the mining machine to have re-established the connection to the external safety system within a first predetermined time period; and
cause the motor of the mining machine to enter the non-operational state, in response to detecting the mining machine not to have re-established the connection to the external safety system within the first predetermined time period.

2. The apparatus according to claim 1, wherein the computer program code is further configured to, with the at least one processor, cause the apparatus to:
cause initiation of at least one preparatory action for the entry of the motor of the mining machine into the non-operational state, in response to detecting the mining machine to have lost the connection to the external safety system; and
cause the motor of the mining machine to enter the non-operational state, further in response to completion of the at least one preparatory action after the first predetermined time period.

3. The apparatus according to claim 2, wherein the computer program code is further configured to, with the at least one processor, cause the apparatus to:
cause cancellation of the at least one preparatory action, in response to detecting the mining machine to have re-established the connection to the external safety system within the first predetermined time period.

4. The apparatus according to claim 2 or 3, wherein the computer program code is further configured to, with the at least one processor, cause the apparatus to:
cause the motor of the mining machine to enter the non-operational state before the completion of the at least one preparatory action, in response to detecting expiry of a second predetermined time period, wherein the second predetermined time period is longer than the first predetermined time period.

5. The apparatus according to any of claims 2 to 4, wherein the computer program code is further configured to, with the at least one processor, cause the apparatus to:
cause the motor of the mining machine to enter the non-operational state without initiation or completion of the at least one preparatory action, in response to receiving an emergency stop command.

6. The apparatus according to any of claims 2 to 5, wherein the at least one preparatory action comprises a cooling sequence of the motor of the mining machine.

7. The apparatus according to claim 6, wherein the cooling sequence comprises one or more of the following:
setting revolutions of the motor of the mining machine to idle speed,
initiating or boosting air-cooling of the motor of the mining machine,
removing oil from a compressor of the motor of the mining machine, or
cooling electric circuitry of the motor of the mining machine to a predetermined temperature.

8. The apparatus according to any preceding claim, wherein the motor of the mining machine comprises a combustion engine or an electric motor.

9. The apparatus according to any of claims 2 to 5, wherein the at least one preparatory action comprises reducing voltage and/or current of an intermediate circuit of a battery-powered motor.

10. The apparatus according to any preceding claim, wherein maintaining the motor of the mining machine in operation comprises setting the motor of the mining machine to idle.

11. The apparatus according to any preceding claim, wherein the computer program code is further configured to, with the at least one processor, cause the apparatus to:
determine the mining machine to have lost the connection to the external safety system, in response to detecting that the mining machine has not received any communication from the external safety system for a third predetermined time period.

12. A mining machine comprising the apparatus according to any of claims 1 to 11.

13. A method for controlling a mining machine, the method comprising:
detecting the mining machine to have lost connection to an external safety system;
controlling the mining machine to stop movement of at least a movable carrier of the mining machine while maintaining a motor of the mining machine in operation, in response to detecting the mining machine to have lost the connection to the external safety system;
determining not to cause the motor of the mining machine to enter a non-operational state, in response to detecting the mining machine to have re-established the connection to the external safety system within a first predetermined time period; and
causing the motor of the mining machine to enter the non-operational state, in response to detecting the mining machine not to have re-established the connection to the external safety system within the first predetermined time period.

14. The method according to claim 11, further comprising:
causing initiation of at least one preparatory action for the entry of the motor of the mining machine into the non-operational state, in response to detecting the mining machine to have lost the connection to the external safety system; and
causing the motor of the mining machine to enter the non-operational state, further in response to completion of the at least one preparatory action after the first predetermined time period.

15. A computer program comprising instructions which, when executed by an apparatus, cause the apparatus at least to:
detect the mining machine to have lost connection to an external safety system;
control the mining machine to stop movement of at least a movable carrier of the mining machine while maintaining a motor of the mining machine in operation, in response to detecting the mining machine to have lost the connection to the external safety system;
determine not to cause the motor of the mining machine to enter a non-operational state, in response to detecting the mining machine to have re-established the connection to the external safety system within a first predetermined time period; and
cause the motor of the mining machine to enter the non-operational state, in response to detecting the mining machine not to have re-established the connection to the external safety system within the first predetermined time period.
